# EUROPEAN PATENT SPECIFICATION

(11) **EP 2 770 027 B1**
(45) Date of publication and mention of the grant of the patent: **27.04.2016**
(21) Application number: 12841631.0
(22) Date of filing: 24.07.2012
(51) Int. Cl.: C08L 101/00, B32B 27/00, B32B 27/18, B32B 27/36, C08K 5/5313, C08L 67/00

(54) **FLAME-RETARDANT RESIN COMPOSITION AND MELT-MOLDED BODY**
FLAMMHEMMENDE HARZZUSAMMENSETZUNG UND SCHMELZGEFORMTER KÖRPER
COMPOSITION DE RÉSINE IGNIFUGE ET CORPS MOULÉ À L'ÉTAT FONDU

(30) Priority: 21.10.2011 JP 2011231359
(43) Date of publication of application: 27.08.2014
(73) Proprietor: Toyobo Co., Ltd., Osaka-shi Osaka 530-8230 (JP)
(72) Inventor: MATSUO, Takashi, Otsu-shi Shiga 520-0292 (JP); SHIGA, Kenji, Otsu-shi Shiga 520-0292 (JP)
(74) Representative: Müller-Boré & Partner Patentanwälte PartG mbB
(86) International application number: PCT/JP2012/068662
(87) International publication number: WO 2013/057994

(56) References cited:
- WO-A1-2007/040075
- DE-A1-102008 012 806
- JP-A- H09 235 480
- JP-A- S61 106 657
- JP-A- S62 169 848
- JP-A- 2001 294 759
- JP-A- 2010 037 375
- JP-A- 2010 077 349
- JP-A- 2010 202 748
- JP-A- 2012 031 243
- US-A1- 2009 088 503
- US-A1- 2009 198 011

## Description

### TECHNICAL FIELD

The present invention relates to a resin composition including a specific phosphorus-containing copolymerized polyester resin and a specific phosphorus-containing compound. Since the resin composition of the present invention contains a specific phosphorus-containing copolymerized polyester resin and a specific phosphorus-containing compound, the resin composition has a transparent appearance and is flame-retardant.

### BACKGROUND ART

In recent years, thermoplastic resins have been commonly used for automobile components, household electric appliances and so on. Thermoplastic resins are generally flammable, but flame retardancy is often required depending on a use location and a use condition. Thus, methods of blending a flame retardant with a thermoplastic resin to impart flame retardancy are adopted. Various flame retardants effective in these applications are known, and among them representative is a phosphorus-containing compound (see Patent Documents 1 to 3).

### PRIOR ART DOCUMENTS

### PATENT DOCUMENTS

Patent Document 1: JP-A-5-331179
Patent Document 2: JP-A-2000-336204
Patent Document 3: JP-A-2001-294759

Document US2009/0088503 A1 is directed to a flame-retardant polyester resin that does not contain a bromine-based or chlorine-based flame retardant or an antimony compound, and has excellent low warping properties, bleed-out resistance and flame retardancy. The examples 1-7 of D1 disclose a composition comprising a thermoplastic polyester and an organic phosphorous-based copolyester.

### SUMMARY OF THE INVENTION

### PROBLEMS TO BE SOLVED BY THE INVENTION

However, as a result of studies conducted by the present inventors, it has been found that when the above-mentioned flame retardants are used for imparting flame retardancy to a thermoplastic resin, a flame retardant should be blended at a high blending ratio for achieving a high level of flame retardancy, and resultantly the problem arises that bleed-out of the flame retardant occurs, and physical properties, such as strength and transparency, of a blend are significantly reduced as compared to the original mechanical properties of the thermoplastic resin, etc. An object of the present invention is to provide a flame-retardant resin composition which is excellent in flame retardancy, causes less bleed-out and exhibits high transparency that is close to the original state of a thermoplastic resin.

### MEANS FOR SOLVING THE PROBLEMS

For achieving the object described above, the present inventors have extensively conducted studies, leading to proposal of the present invention. That is, the present invention provides:
(1) a flame-retardant resin composition including a thermoplastic resin (A), a copolymerized polyester resin (B) wherein a phosphorus-containing component represented by the general formula (1) described later is copolymerized, and a phosphorus-containing compound (C) represented by the general formula (2) described later.
(2) the flame-retardant resin composition according to (1), including 50 to 90% by weight of the thermoplastic resin (A), 1 to 40% by weight of the copolymerized polyester resin (B) and 1 to 20% by weight of the phosphorus-containing compound (C).
(3) the flame-retardant resin composition according to (1) or (2), wherein the thermoplastic resin (A) is one selected from a polyester resin other than the component (B), a polycarbonate resin, a polyamide resin, a polyolefin resin, a polystyrene resin and an ABS resin, or a mixture of two or more thereof.
(4) the flame-retardant resin composition according to any one of (1) to (3), wherein in the phosphorus-containing compound (C), each of R¹ to R⁵ and X₁ to X₃ represents a hydrogen atom in the general formula (2).
(5) A melt-molded body including the resin composition according to any one of (1) to (4).
(6) A sheet including the resin composition according to any one of (1) to (4).
(7) A laminate including as a constituent member the sheet according to (6).

### EFFECTS OF THE INVENTION

A flame-retardant resin composition of the present invention is formed by blending a specific phosphorus-containing copolymerized polyester resin and a specific phosphorus-containing compound with a thermoplastic resin, so that flame retardancy can be imparted to the thermoplastic resin while high transparency that is close to the original state of the thermoplastic resin is exhibited, and also bleed-out of a flame retardant hardly occurs. Further, the flame-retardant resin composition of the present application is formed principally of a thermoplastic resin, and therefore can be shaped into various forms by melt molding techniques such as extrusion molding and injection molding, so that a molded body with a fine appearance, which has high transparency and does not cause bleed-out while having flame retardancy, can be obtained.

### MODE FOR CARRYING OUT THE INVENTION

A flame-retardant resin composition of the present invention is a flame-retardant resin composition containing a thermoplastic resin (A), a copolymerized polyester resin (B) wherein a phosphorus component represented by the following general formula (1) is copolymerized, and a phosphorus-containing compound (C) represented by the following general formula (2), the flame-retardant resin composition exhibiting such an effect that flame retardancy can be imparted to the thermoplastic resin (A) while high transparency that is close to the original state of the thermoplastic resin (A) is exhibited, and also bleed-out of a flame retardant hardly occurs.

General formula (1) 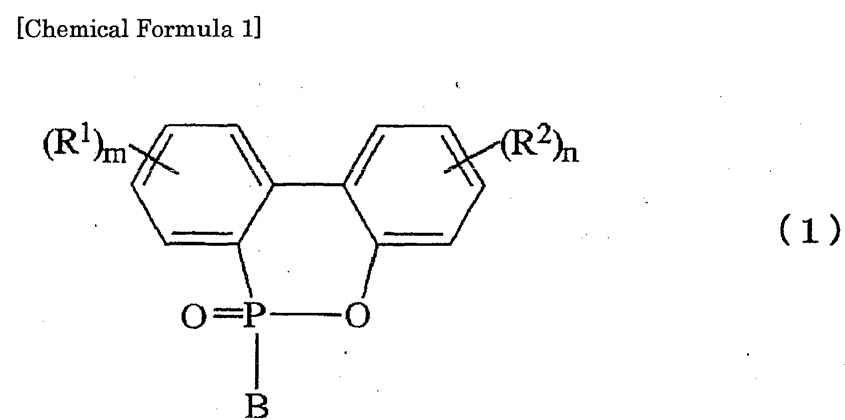 (in the general formula (1), each of R¹ and R² independently represents an alkyl group having 1 to 4 carbon atoms, an aryl group, a cycloalkyl group, an aralkyl group, an alkoxyl group, an aryloxy group, a cycloalkyloxy group, an aralkyloxy group, a carboxyl group, a carboxylic acid ester group, a carboxylic acid base or a halogen atom; each of m and n independently represents an integer of 0 to 4; and B is an ester-forming functional group) In the general formula (1), R¹ and R² are each independently an alkyl group of carbon number 1 to 4, aryl group, a cycloalkyl group, an aralkyl group, an alkoxy group, an aryloxy group, a cycloalkyloxy group, an aralkyloxy group, a carboxyl group, a carboxylic acid ester group, a carboxylate group, or a halogen atom. m and n are each independently an integer of 0 to 4. B is a monovalent organic group having an ester-forming functional group.)

General formula (2) 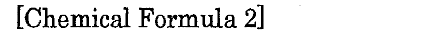 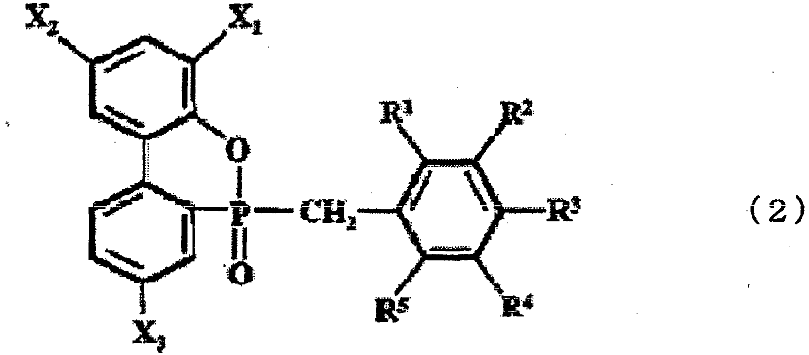 (in the general formula (2), each of R¹ to R⁵ independently represents a hydrogen atom, an alkyl group having 1 to 6 carbon atoms, a cycloalkyl group, an aralkyl group, an aryl group or a hydroxyl group; and each of X₁ to X₃ independently represents a hydrogen atom, an alkyl group having 1 to 6 carbon atoms, a cycloalkyl group, an aryl group or an aralkyl group)

### <Thermoplastic Resin (A)>

The thermoplastic resin (A) in the present invention is not particularly limited as long as it is a thermoplastic resin having thermoplasticity that enables the resin to be shaped by a melt molding method, but a resin having high transparency is preferred for maximizing the feature of the present invention, i.e. an advantage that the transparency of a thermoplastic resin is hardly impaired. As an example of the preferred thermoplastic resin (A), one selected from a polyester resin other than the component (B), a polycarbonate resin, a polyamide resin, a polyolefin resin, a polystyrene resin and an ABS resin, or a mixture of two or more thereof may be mentioned. Examples of the polyester resin other than the component (B) may include a polyethylene terephthalate resin, a polybutylene terephthalate resin and a polytrimethylene terephthalate resin.

As for the melt viscosity of the thermoplastic resin (A), one having a melt viscosity suitable for shaping of a molded body. When a resin having a low melt viscosity during melt molding, the transparency of a material made flame-retardant tends to be improved. Particularly effective melt viscosity of the thermoplastic resin (A) during melt molding is preferably 5 or more, more preferably 30 or more, further preferably 60 or more in terms of a melt index specified in ISO 1133 (hereinafter, referred to as MI; measurement temperature: 300°C; load: 1200 g; unit: g/10 minutes).

### <Copolymerized Polyester Resin (B) Wherein Phosphorus-Containing Component Is Copolymerized>

The copolymerized polyester resin (B) in the present invention is a copolymerized polyester resin wherein a phosphorus-containing component represented by the general formula (1) is copolymerized.

In the general formula (1), m and n are preferably 0 from the viewpoint of ease of acquirement.

In the general formula (1), B is a monovalent organic group having an ester-forming functional group. Preferred examples of the ester-forming functional group may include a hydroxyl group, a carboxyl group and a carboxylic acid alkyl ester. When B has two ester-forming functional groups, a phosphorus-containing component represented by the general formula (1) can be copolymerized in the main chain of the copolymerized polyester resin (B), so that the concentration of phosphorus contained in the copolymerized polyester resin (B) is easily increased. Therefore, preferably the phosphorus-containing component of the general formula (1) is principally formed of a phosphorus-containing component with B having two ester-forming functional groups. As a phosphorus-containing component, B having one or three or more ester-forming functional groups can be used in combination as long as the amount of such phosphorus is small.

The phosphorus content of the copolymerized polyester resin (B) is preferably 5000 mg/kg, more preferably 30,000 mg/kg, further preferably 60,000 mg/kg from the viewpoint of improving flame retardancy. The copolymerized polyester resin (B) can be obtained using, for example, the method disclosed in Japanese Patent No. 3934133.

It is preferred that components other than the phosphorus-containing component represented by the general formula (1), which form the copolymerized polyester resin (B), include principally a dicarboxylic acid component and a glycol component, and a small amount of tri- or more functional polybasic acid and/or a tri- or more functional polyhydric alcohol may be copolymerized. As the dicarboxylic acid component, an aromatic dicarboxylic acid, a cycloaliphatic dicarboxylic acid, or an aliphatic dicarboxylic acid can be used. Examples of the aromatic dicarboxylic acid may include terephthalic acid, isophthalic acid and naphthalenedicarboxylic acid. Examples of the cycloaliphatic dicarboxylic acid may include cyclohexanedicarboxylic acid. Examples of the aliphatic dicarboxylic acid may include adipic acid and sebacic acid. Examples of the glycol component include linear or branched alkylene glycols; glycols having an alicyclic structure, such as cyclohexanedimethanol; and glycols having an aromatic ring structure, such as a bisphenol A ethylene oxide adduct.

Preferably a difference between the refractive indexes of the thermoplastic resin (A) and the copolymerized polyester resin (B) is small or both the resins are compatible with each other for improving the transparency of the flame-retardant composition of the present invention. The refractive index of the component (B) and compatibility thereof with the component (A) can be controlled by types and ratios of components used as an acid component and an alcohol component that form the component (B).

The molecular weight of the copolymerized polyester resin (B) is not particularly limited, but a number average molecular weight of 5,000 to 30,000 is particularly preferred because the bleed-out suppressing effect is particularly high and the physical properties of the thermoplastic resin (A) are less degraded.

### <Phosphorus-Containing Compound (C)>

The phosphorus-containing compound (C) in the present invention is a phosphorus-containing compound represented by the general formula (2).

It is particularly preferred that each of R¹ to R⁵ and X₁ to X₃ represents a hydrogen atom in the general formula (2) because particularly flame retardancy, bleed-out characteristics and transparency are well balanced. Such a phosphorus compound is commercially available from, for example, SANKO Company, Limited.

### <Flame-Retardant Resin Composition>

Preferably the flame-retardant resin composition of the present invention includes 50 to 90% by weight of the thermoplastic resin (A), 1 to 40% by weight of the phosphorus-containing component copolymerized polyester resin (B) and 1 to 20% by weight of the phosphorus-containing compound (C). When the blending ratio of the copolymerized polyester resin (B) is increased, flame retardancy can be improved while degradation of physical properties is suppressed, but transparency tends to be impaired. When the blending ratio of the phosphorus-containing compound (C) is increased, flame retardancy can be improved while transparency is kept unchanged, but degradation of physical properties, particularly degradation of heat resistance tends to be significant. On the other hand, when the blending ratios of the copolymerized polyester resin (B) and the phosphorus-containing compound (C) are excessively high and the blending ratio of the thermoplastic resin (A) is excessively low, it tends to be difficult to exhibit physical properties that are originally possessed by the thermoplastic resin (A). Thus, by blending these three components with good balance, a flame-retardant resin composition, which retains physical properties, maintains transparency and hardly causes bleed-out, can be obtained.

In addition to the components (A), (B) and (C), various kinds of additives can be blended in the resin composition of the present invention. Examples of the additive include a flame retardant other than components (B) and (C) of the present invention, a flame-retardant auxiliary, a dripping inhibitor, a filler, an antioxidant, a stabilizer, an antistatic agent, a lubricant, a softener, a pigment, a dye, an ultraviolet absorber, a light stabilizer and a reinforcing material.

Examples of the flame retardant other than components (B) and (C) include triphenyl phosphate, tricresyl phosphate, bisphenol A bis(diphenylphosphate), oligomer-type organic phosphorus-type flame retardants, magnesium hydroxide, aluminum hydroxide, melamine phosphate, melamine cyanurate, ammonium polyphosphate, melamine, thermosetting resin-coated red phosphorus, silicone resins, silicone rubber and silicone-type flame retardants. Examples of the flame-retardant auxiliary include graphite, activated carbon, low melting-point glass and carbon powders such as carbon black. Examples of the dripping inhibitor include publicly known fluorine-type resins such as polytetrafluoroethylene and a polytetrafluoroethylene-polyhexafluoropropylene copolymer. Examples of the filler include glass fibers, carbon fibers, metal fibers, ceramic fibers, powdered, granular and plate-shaped inorganic fillers such as those of mica, silica, talc, calcium carbonate, alumina and glass flakes, and organic fillers such as wood powders. They may be used alone or in combination of two or more thereof. Examples of other additives include antioxidants and/or stabilizers of phosphorus types such as pentaerythritol diphosphate derivatives, phenol types such as hindered phenol derivatives, amine types and sulfur types etc.; antistatic agents such as cationic surfactants and nonionic surfactants; lubricants of wax types etc.; pigments of titanium oxide and phthalocyanine types etc.; ultraviolet absorbers and/or light stabilizers of benzotriazole types and acrylonitrile types etc.; and reinforcing materials such as glass fibers, metal fibers and whiskers.

In production of the flame-retardant resin composition of the present invention, the blending order and the mixing method of the components are not particularly limited. The flame-retardant resin composition can be obtained by, for example, mixing components (A), (B) and (C) and as necessary the various additives described above by a publicly known method, and melting and kneading the mixture. For mixing and melting and kneading, general-purpose apparatuses such as a single screw extruder, a twin screw extruder such as a twin screw extruder with a vent, a Henschel mixer, a Banbury mixer, a kneader mixer and a roll can be used alone or in combination.

### <Melt-Molded Body>

The melt-molded body of the present invention is formed by molding the flame-retardant resin composition of the present invention by a melt molding method. Examples of the melt molding method include an injection molding method, an extrusion molding method, a blow molding method and T-die extrusion molding. The molded shape is not particularly limited, for example not limited to a simple shape such as a rod shape, a plate shape, a sheet shape or a film shape, and a molded body in a complicated form may be obtained by profile extrusion molding or cast molding.

### EXAMPLES

For explaining the present invention further in detail, Examples and Comparative Examples are described below, but the present invention is not limited to Examples. The "part" and "%" in each Example are both based on weight. The evaluation values are values measured by the following methods.

### <Analysis/Evaluation Method>

(1) Phosphorus concentration: measured by atomic absorption spectrometry. The unit was set to mg/kg.
(2) Transparency: a 10 cm-square flat plate having a thickness of 2 mm was prepared by injection molding, and a haze was measured using a haze meter (MODEL NDH2000 manufactured by NIPPON DENSHOKU INDUSTRIES CO., LTD.). Samples having a haze of more than 10% were judged to be "opaque".
(3) Flame retardancy

Test method: in accordance with UL-94 (average flame quenching time for 5 specimens).

Test piece thickness: 1.6 mm, 3.2 mm.

Evaluation: Specified ranks V-0, V-1 and V-2.
(4) Bleed-out test: a 10 cm-square flat plate having a thickness of 2 mm was prepared by injection molding, and left standing at 23°C and 50% RH for 3000 hours, and the sample was examined by visual observation of the surface and touch to determine whether a powdered bled-out matter was present or not.
(5) Melt index (MI): measured in accordance with ISO 1133 (measurement temperature: 300°C; load: 1200 g).
(6) limiting viscosity: measured at 30°C using a phenol/1,1,2,2-tetrachloroethane mixed solution (weight ratio (3/2)).

### Example 1

Ten (10) parts by weight of a phosphorus-containing copolymerized polyester resin (B) (manufactured by TOYOBOSEKI CO., LTD; trade name: VYRON GH-230; phosphorus concentration: 30,000 mg/kg; limiting viscosity: 0.66 dL/g) and 10 parts by weight of a phosphorus-containing compound (C) (manufactured by SANKO Company, Limited.; trade name: BCA; phosphorus concentration: 101,000 mg/kg) were mixed with 80 parts by weight of a polycarbonate resin (manufactured by Mitsubishi Engineering-Plastics Corporation; trade name: IUPILON H-3000) as a thermoplastic resin (A) using a Henschel mixer, and the mixture was melted and kneaded in a twin screw extruder with a vent to obtain pellets of a resin composition 1. The obtained pellets were molded in an injection molding machine to prepare test pieces for flame retardancy test (thickness: 1.6 mm, 3.2 mm) and a 10 cm-square flat plate having a thickness of 2 mm, and physical properties were measured according to the aforementioned analysis/evaluation methods.

### Examples 2 to 5 and Comparative Examples 1 to 3

Resin compositions 2 to 8 were produced in the same manner as in Example 1 except that the blending ratio was changed as described in Table 1, and the resin compositions were evaluated in the same manner as in Example 1. Evaluation results are shown in Table 1.

**[Table 1]**

| Example/Comparative Example | | | Example 1 | Example 2 | Example 3 | Example 4 | Example 5 | Comparative Example 1 | Comparative Example 2 | Comparative Example 3 |
|---|---|---|---|---|---|---|---|---|---|---|
| Resin composition number | | | 1 | 2 | 3 | 4 | 5 | 6 | 7 | 8 |
| Composition | Thermoplastic resin (A) | H-3000 | 80 | 88 | | | 60 | 80 | | 60 |
| | | RE-530 | | | 80 | 88 | | | 80 | |
| | Coplymerized polyester resin (B) | GH-230 | 10 | 5 | 10 | 5 | 20 | 15 | 10 | |
| | Phosphorus-containing compound (C) | BCA | 10 | 7 | 10 | 7 | 20 | | | 40 |
| | Other phosphorus-containing compound | OP-930 | | | | | | 5 | 10 | |
| Properties | Phosphorus concentration mg/kg | | 13,100 | 8,570 | 13,100 | 8,570 | 26,200 | 16,200 | 21,800 | 40,400 |
| | Flame retardancy (UL-94) | Thickness of 1.6 mm | V-0 | V-0 | V-0 | V-0 | V-0 | V-0 | V-0 | V-0 |
| | | Thickness of 3.2 mm | V-0 | V-0 | V-0 | V-0 | V-0 | V-0 | V-0 | V-0 |
| | Transparency (Haze %) | | 5 | 2 | 2 | 2 | 5 | opaque | opaque | 1 |
| | Bleed-out test | | none | none | none | none | none | none | none | present |

H-3000: polycarbonate resin; manufactured by Mitsubishi Engineering-Plastics Corporation; trade name: IUPILON H-3000.
RE-530: polyethylene terephthalate resin; manufactured by TOYOBOSEKI CO., LTD; trade name: RE-530; limiting viscosity: 0.53 dL/g.
GH230: copolymerized polyester resin (B) wherein a phosphorus-containing component represented by the general formula (1) is copolymerized; manufactured by TOYOBOSEKI CO., LTD; trade name: VYRON GH-230; phosphorus concentration: 30,000 mg/kg; limiting viscosity: 0.66 dL/g.
BCA: phosphorus-containing compound (C) represented by the general formula (2); manufactured by SANKO Company, Limited.; trade name: BCA; phosphorus concentration: 101,000 mg/kg.
OP-930: phosphoric acid metal salt-type flame retardant; manufactured by Clariant (Japan) K.K.; trade name: OP-930. OP-930 does not correspond to the phosphorus-containing compound (C) of the present invention.

From Examples 1 to 5, it is apparent that the flame-retardant resin composition of the present invention is excellent in transparency and flame retardancy, and causes no bleed-out. On the other hand, Comparative Examples 1 and 2, where a different phosphorus-type flame retardant is used, satisfy V-0 in the UL-94 for flame retardancy, but loses transparency Comparative Example 3, where the phosphorus-containing copolymerized polyester resin (B) is not blended, is inferior to the present invention in that bleed-out of the phosphorus-containing compound (C) occurs although both flame retardancy and transparency may be attained by adding a large amount of a material having a high concentration of the phosphorus-containing compound (C).

### INDUSTRIAL APPLICABILITY

The resin composition of the present invention is excellent in flame retardancy, does not significantly impair transparency possessed by a base resin, and does not cause the problem of bleed-out. Therefore, the resin composition is useful as a material for forming commodities, housings and parts of various kinds of devices, and optical components such as window plates and lenses, each of which takes advantage of transparency and is excellent in design characteristic.

## Claims

1. A flame-retardant resin composition comprising a thermoplastic resin (A), a copolymerized polyester resin (B) wherein a phosphorus-containing component represented by the following general formula (1) is copolymerized, and a phosphorus-containing compound (C) represented by the following general formula (2):
General Formula (1): 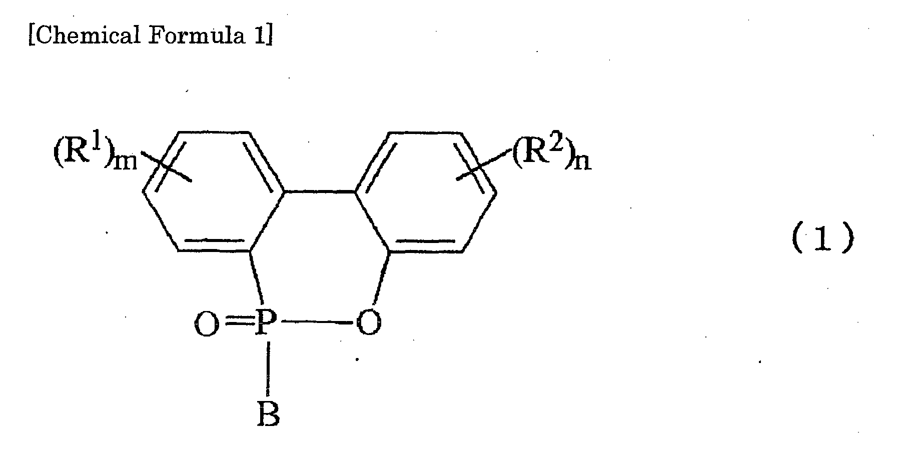 (in the general formula (1), each of R¹ and R² independently represents an alkyl group having 1 to 4 carbon atoms, an aryl group, a cycloalkyl group, an aralkyl group, an alkoxyl group, an aryloxy group, a cycloalkyloxy group, an aralkyloxy group, a carboxyl group, a carboxylic acid ester group, a carboxylic acid base or a halogen atom; each of m and n independently represents an integer of 0 to 4; and B is an ester-forming functional group)
General Formula (2): 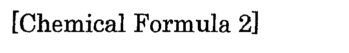 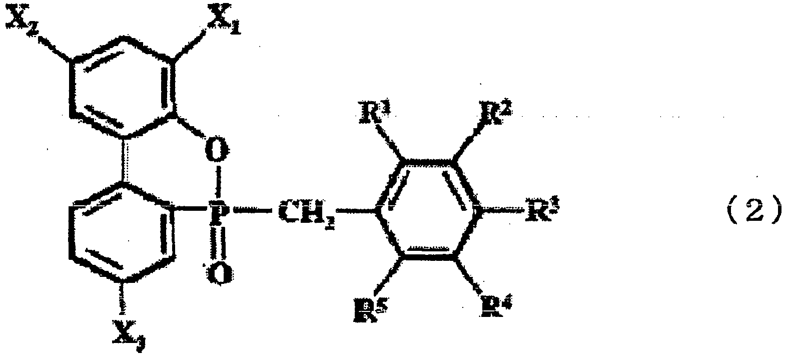 (in the general formula (2), each of R¹ to R⁵ independently represents a hydrogen atom, an alkyl group having 1 to 6 carbon atoms, a cycloalkyl group, an aralkyl group, an aryl group or a hydroxyl group; and each of X₁ to X₃ independently represents a hydrogen atom, an alkyl group having 1 to 6 carbon atoms, a cycloalkyl group, an aryl group or an aralkyl group)

2. The flame-retardant resin composition according to claim 1, comprising 50 to 90% by weight of the thermoplastic resin (A), 1 to 40% by weight of the copolymerized polyester resin (B) and 1 to 20% by weight of the phosphorus-containing compound (C).

3. The flame-retardant resin composition according to claim 1 or 2, wherein the thermoplastic resin (A) is one selected from a polyester resin other than the component (B), a polycarbonate resin, a polyamide resin, a polyolefin resin, a polystyrene resin and an ABS resin, or a mixture of two or more thereof.

4. The flame=retardant resin composition according to any one of claims 1 to 3, wherein in the phosphorus-containing compound (C), each of R¹ to R⁵ and X₁ to X₃ is a hydrogen atom in the general formula (2).

5. A melt-molded body comprising the resin composition according to any one of claims 1 to 4.

6. A sheet comprising the resin composition according to any one of claims 1 to 4.

7. A laminate comprising as a constituent member the sheet according to claim 6.

## Patentansprüche

1. Flammhemmende Harzzusammensetzung, umfassend ein thermoplastisches Harz (A), ein copolymerisiertes Polyesterharz (B), wobei eine durch die folgende allgemeine Formel (1) dargestellte phosphorhaltige Komponente copolymerisiert ist, und eine durch die folgende allgemeine Formel (2) dargestellte phosphorhaltige Verbindung (C):
Allgemeine Formel (1): 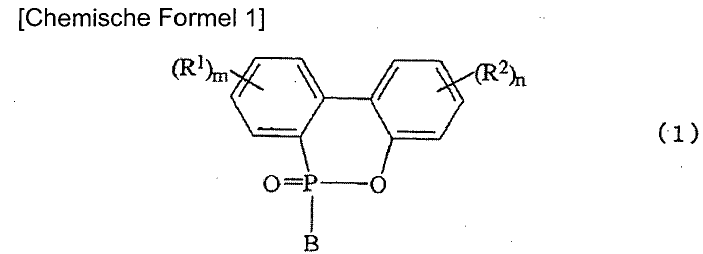 (in der allgemeinen Formel (1) stellt jedes von R¹ und R² unabhängig eine Alkylgruppe mit 1 bis 4 Kohlenstoffatomen, eine Arylgruppe, eine Cycloalkylgruppe, eine Aralkylgruppe, eine Alkoxylgruppe, eine Aryloxygruppe, eine Cycloalkyloxygruppe, eine Aralkyloxygruppe, eine Carboxylgruppe, eine Carbonsäureestergruppe, eine Carbonsäurebase oder ein Halogenatom dar; jedes von m und n stellt unabhängig eine ganze Zahl von 0 bis 4 dar; und B ist eine esterbildende funktionelle Gruppe)
Allgemeine Formel (2): 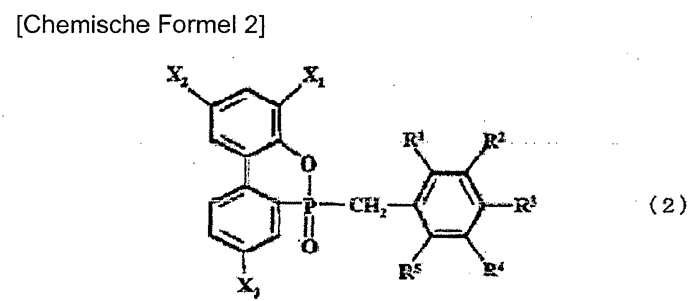 (in der allgemeinen Formel (2) stellt jedes von R¹ bis R⁵ unabhängig ein Wasserstoffatom, eine Alkylgruppe mit 1 bis 6 Kohlenstoffatomen, eine Cycloalkylgruppe, eine Aralkylgruppe, eine Arylgruppe oder eine Hydroxylgruppe dar; und jedes von X₁ bis X₃ stellt unabhängig ein Wasserstoffatom, eine Alkylgruppe mit 1 bis 6 Kohlenstoffatomen, eine Cycloalkylgruppe, eine Arylgruppe oder eine Aralkylgruppe dar)

2. Flammhemmende Harzzusammensetzung nach Anspruch 1, umfassend 50 bis 90 Gewichts% des thermoplastischen Harzes (A), 1 bis 40 Gewichts% des copolymerisierten Polyesterharzes (B) und 1 bis 20 Gewichts% der phosphorhaltigen Verbindung (C).

3. Flammhemmende Harzzusammensetzung nach Anspruch 1 oder 2, wobei das thermoplastische Harz (A) eines ist, welches aus einem anderen Polyesterharz als die Komponente (B), einem Polycarbonatharz, einem Polyamidharz, einem Polyolefinharz, einem Polystyrolharz und einem ABS-Harz, oder einem Gemisch aus zwei oder mehreren davon, gewählt ist.

4. Flammhemmende Harzzusammensetzung nach einem der Ansprüche 1 bis 3, wobei in der phosphorhaltigen Verbindung (C) jedes von R¹ bis R⁵ und X₁ bis X₃ in der allgemeinen Formel (2) ein Wasserstoffatom ist.

5. Schmelzgeformter Körper, umfassend die Harzzusammensetzung nach einem der Ansprüche 1 bis 4.

6. Blatt, umfassend die Harzzusammensetzung nach einem der Ansprüche 1 bis 4.

7. Laminat, umfassend das Blatt nach Anspruch 6 als einen Bestandteil.

## Revendications

1. Composition de résine retardatrice de flamme comprenant une résine thermoplastique (A),
une résine polyester copolymérisée (B) dans laquelle un composé contenant du phosphore représenté par la formule générale suivante (1) est copolymérisé, et un composé contenant du phosphore (C) représenté par la formule générale suivante (2):
Formule Générale (1) : 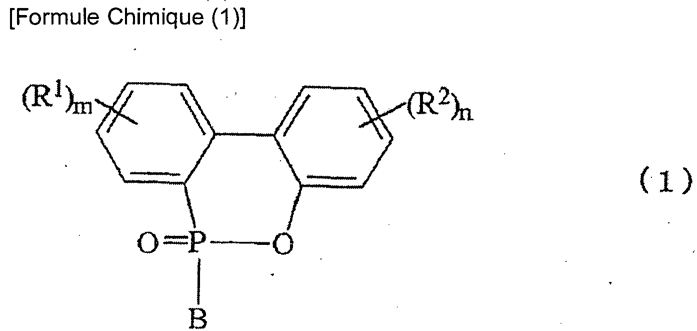 (dans la formule générale (1), chacun de R¹ et R² représente indépendamment un groupement alkyle possédant 1 à 4 atomes de carbone, un groupement aryle, un groupement cycloalkyle, un groupement aralkyle, un groupement alcoxyle, un groupement aryloxy, un groupement cycloalkyloxy, un groupement aralkyloxy, un groupement carboxyle, un groupement ester d'un acide carboxylique, une base d'un acide carboxylique ou un atome d'halogène ; chacun de m et de n représente indépendamment un entier de 0 à 4 ; et B est un groupement fonctionnel formant un ester)
Formule Générale (2) : 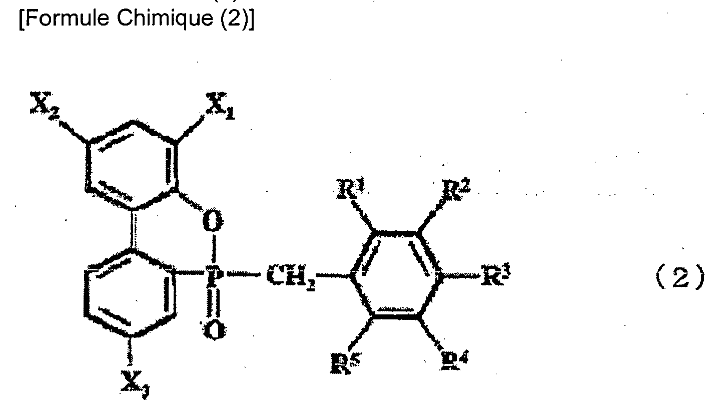 (dans la formule générale (2) chacun de R¹ à R⁵ représente indépendamment un atome d'hydrogène, un groupement alkyle possédant 1 à 6 atomes de carbone, un groupement cycloalkyle, un groupement aralkyle, un groupement aryle ou un groupement hydroxyle ; et chacun de X₁ à X₃ représente indépendamment un atome d'hydrogène, un groupement alkyle possédant 1 à 6 atomes de carbone, un groupement cycloalkyle, un groupement aryle ou un groupement aralkyle)

2. Composition de résine retardatrice de flamme selon la revendication 1, comprenant 50 à 90 % en poids de la résine thermoplastique (A), 1 à 40 % en poids de la résine de polyester copolymérisée (B) et 1 à 20 % en poids du composé contenant du phosphore (C).

3. Composition de résine retardatrice de flamme selon la revendication 1 ou 2, dans laquelle la résine thermoplastique (A) est une sélectionnée parmi une résine polyester autre que le composé (B), une résine polycarbonate, une résine polyamide, une résine polyoléfine, une résine polystyrène et une résine ABS, ou un mélange de deux ou plus d'entre elles.

4. Composition de résine retardatrice de flamme selon l'une quelconque des revendications 1 à 3, dans laquelle le composé contenant du phosphore (C), chacun de R¹ à R⁵ et X¹ à X³ est un atome d'hydrogène dans la formule générale (2).

5. Corps moulé à l'état fondu comprenant la composition de résine selon l'une quelconque des revendications 1 à 4.

6. Feuille comprenant la composition de résine selon l'une quelconque des revendications 1 à 4.

7. Stratifié comprenant comme élément constitutif la feuille selon la revendication 6.
